# EUROPEAN PATENT SPECIFICATION

(11) **EP 0 433 505 B1**
(45) Date of publication and mention of the grant of the patent: **03.02.1993**
(21) Application number: 89313484.1
(22) Date of filing: 21.12.1989
(51) Int. Cl.: C09K 11/78, C09K 11/77

(54) **Manufacturing method for red phosphor**
Verfahren zur Herstellung eines roten Phoshors
Procédé de fabrication d'un matériau luminescent de lumière rouge

(43) Date of publication of application: 26.06.1991
(73) Proprietor: SAMSUNG DISPLAY DEVICES CO., LTD., Hwaseong-gun, Kyungki-do (KR)
(72) Inventor: Yang, Junmo, Suwon-city Kyungki-do (KR)
(74) Representative: Griffin, Kenneth David

(56) References cited:
- DE-A- 2 422 883

## Description

The present invention relates to a manufacturing method for a red phosphor composed of europium-activated yttrium oxide (to be called hereinafter "Y₂O₃ : Eu"), and particularly to a manufacturing method for a Y₂O₃ : Eu red phosphor in which a composite flux composed of Na₂ Co₃ , NaF and B₂O₃ is used in manufacturing the phosphor so that the distribution of the particle size should become uniform, the shape of the particles should become spherical, and the luminesence should be improved.

Conventionally, when manufacturing a Y₂O₃ : Eu phosphor for use in a projection tube, a composite flux/composed of Na₂CO₃, K₂HPO₄ and B₂O₃, or H₃BO₃, NaF and Na₂CO₃ was used.

However, the conventional phosphor manufactured based on the above described method was not uniform in its particle shapes, with the result that the manufactured phophor layer showed a lowered luminance.

### SUMMARY OF THE INVENTION

The present invetnion is intended to overcome the above described disadvantage of the conventional technique.

Therefore, it is the object of the present invention to provide a manufacturing method for a Y₂O₃ : Eu red phosphor, in which a composite flux composed of Na₂ CO₃ , NaF and B₂O₃ is used in manufacturing the phosphor, thereby obtaining a phosphor having a uniform distribution of the particle size, a good filling state and an improved luminance.

### BRIEF DESCRIPTION OF THE DRAWINGS

The above object and other advantages of the present invetion will become more apparent by describing in detail the preferred embodiment of the present invetion with reference to the attached drawings in which;
Fig. 1 is a graphical illustration showing the luminescence spectra of the Y₂O₃ : Eu phosphors;
Fig. 2 is an electron micrograph (by a scanning electron microscope) (SEM) showing the particle shapes of a conventional phosphor manufactured through the use of a composite flux composed of Na₂CO₃, NaF and H₃BO₃;
FIG. 3 is an electron micrograph (by SEM) showing the particle shapes of a conventional phosphor manufactured through the use of a composite flux composed of Na₂CO₃, K₂HPO₄ and B₂O₃; and
FIG. 4 is an electron microscope (by SEM) showing the particle shapes of the phosphor according to the present invention.

### DETAILED DESCRIPTION OF THE INVENTION

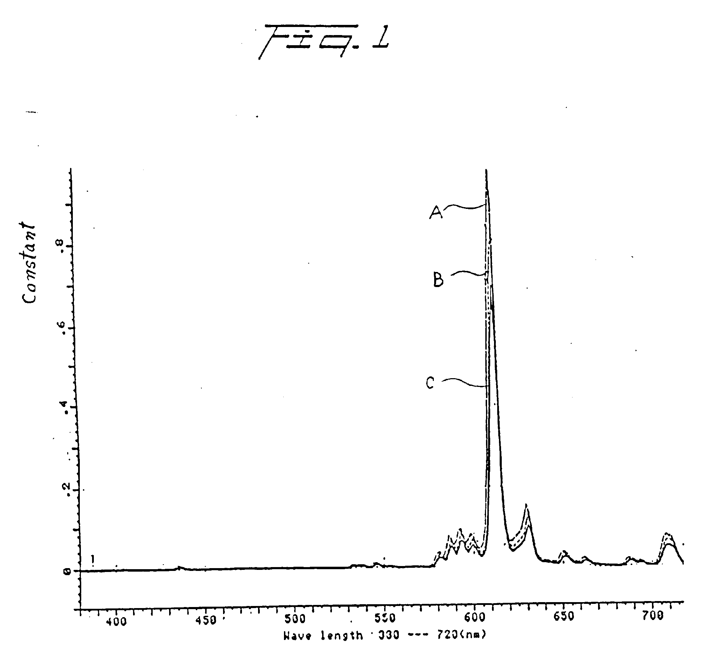

FIG. 1 is a graphical illustration showing the spectra for the manufactured phosphors, the spectra being measured by means of a P.T.E. (Phosphor test equipment). In this drawing, the graph A represents the spectrum obtained from the phosphor of the present invetion using a composite flux composed of Na₂CO₃, NaF and B₂O₃, while the graphs B and C represent the spectra obtained from the conventional phosphors using a composite flux composed of Na₂CO₃, K₂HPO₄ and B₂O₃ in the manufacturing process.

As a result of the measurements, it has become apparent that the luminance of the phosphor according to the present invention is upgraded by about 4-7% compared with that of the conventional ones.

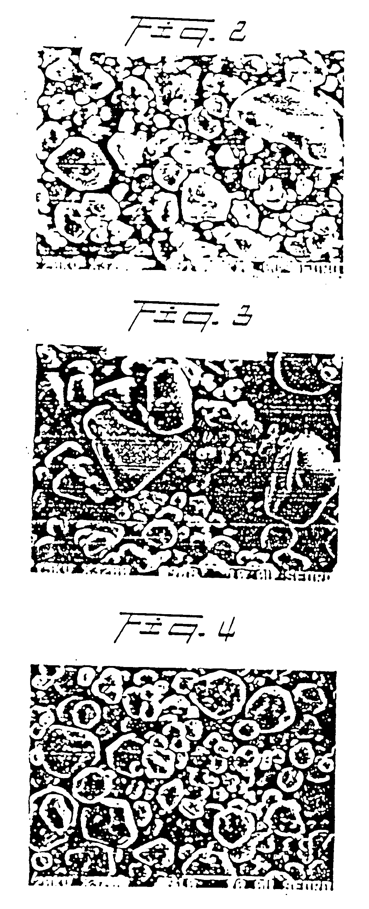

FIGS. 2, 3 and 4 are electron micrographs (by SEM) showing the particle shapes or phosphors, and of them, FIG. 2 and 3 illustrate the case of the conventional phophors manufactured through the use of composite fluxes composed of Na₂CO₃, NaF and H₃BO₃, and composed of Na₂CO₃, K₂HPO₄ and B₂O₃, while FIG. 4 shows the particle shapes of the phosphor according to the present invention. According to these electron micrographs as shown in the drawings, the phosphor according to the present invention shows a far more uniform particle size distribution compared with that of the conventional ones, and the particle shapes are also more desirable in the phosphor of the present invention.

First, raw materials such as yttrium oxide (Y₂O₃) and europium oxide (Eu₂O₃) are sufficiently mixed with fluxes such as Na₂CO₃ (in the amount of 2-6g per 100g of Y₂O₃), NaF (in the amount of 2-6g per 100g of Y₂O₃), and B₂O₃ (in the amount of 0.5-1.0g per 100g of Y₂O₃) through the use of a dry method or by using proper solvant. The mixture is transferred into a heat resistant container, then a baking is carried out at a temperature of 1300-1400°C, a washing is carried out using water, and then, a drying is carried out, thereby obtaining the phosphor of the present invention.

The actual examples of the present invention will be described below.

### Example 1

- Yttrium oxide (Y₂O₃): : 100g
- Europium oxide (Eu₂O₃): : 6.5g
- Sodium carbonate (Na₂CO₃: : 5g
- Sodium fluoride (NaF): : 4g
- Boron oxide (B₂O₃): : 0.9g

The above raw materials were sufficiently mixed, the mixture was put into a heat resistant container, a baking was carried out at a temperature of 1400 °C for three hours, a washing was carried out, and a drying was carried out. The phosphor manufactured through the above described process showed a luminance improved by 7% over the conventional phosphors.

### Example 2

- Yttrium oxide (Y₂O₃): : 100g
- Europium oxide (Eu₂O₃): : 6.5g
- Sodium carbonate (Na₂CO₃): : 4g
- Sodium fluoride (NaF): : 3g
- Boron oxide (B₂O₃): : 1.0g

The above raw materials were sufficiently mixed, the mixture was put into a heat resistant container, a baking was carried out at a temperature of 1350° C for two hours and thirty minutes, a washing was carried out, and a drying was carried out. The phosphor manufactured through the above process showed a luminance improvement by 6% over the conventional phosphors.

The Y₂O₃ : Eu red phosphor according to the present invention is uniform in its particle size distribution, has a desirable spherical particle shape, shows a perfect filling state of the layer, and shows a luminance improvement by 4-7% over that of the conventional phosphors.

## Claims

1. A method of manufacturing a Y₂O₃: Eu red phosphor from yttrium oxide (Y₂O₃) and europium oxide (Eu₂O₃) characterized in that a composite flux composed of a mixture of Na₂CO₃, NaF and B₂O₃ is used, the addition ratios of the above compounds per 100 parts by weight of yttrium oxide being:-
Na₂CO₃ : 2-6 parts by weight
NaF : 2-6 parts by weight
B₂O₃ : 0.5-1.0 parts by weight

2. A method according to Claim 1 characterized in that yttrium oxide and europium oxide are mixed together with 2-6 parts by weight Na₂CO₃, 2-6 parts by weight NaF and 0.5-1.0 parts by weight B₂O₃ the mixture heated at a temperature of 1300-1400°C washed and dried.

3. A method according to Claim 1 or Claim 2 characterized in that 5-10 grams of europium oxide are present per 100 grams of yttrium oxide.

4. A composite flux for use in the manufacture of Y₂O₃: Eu red phosphor characterized in that the flux comprises 2-6 parts by weight Na₂CO₃, 2-6 parts by weight NaF and 0.5-1.0 parts by weight B₂O₃ per 100 parts by weight of yttrium oxide.

## Patentansprüche

1. Verfahren zur Herstellung eines roten Y₂O₃:Eu-Leuchtstoffs aus Yttriumoxid (Y₂O₃) und Europiumoxid (Eu₂O₃), dadurch gekennzeichnet, daß ein aus einem Gemisch von Na₂CO₃, NaF und B₂O₃ bestehender zusammengesetzter Zuschlag verwendet wird, wobei die obigen Verbindungen in folgenden Mengen pro 100 Gewichtsteilen Yttriumoxid zugesetzt werden:
Na₂CO₃ : 2 bis 6 Gewichtsteile
NaF : 2 bis 6 Gewichtsteile
B₂O₃ : 0,5 bis 1,0 Gewichtsteile

2. Verfahren nach Anspruch 1, dadurch gekennzeichnet, daß Yttriumoxid und Europiumoxid mit 2 bis 6 Gewichtsteilen Na₂CO₃, 2 bis 6 Gewichtsteilen NaF und 0,5 bis 1,0 Gewichtsteilen B₂O₃ zusammengemischt werden und das Gemisch auf eine Temperatur von 1300 bis 1400 °C erhitzt, gewaschen und getrocknet wird.

3. Verfahren nach Anspruch 1 oder 2, dadurch gekennzeichnet, daß 5 bis 10 g Europiumoxid pro 100 g Yttriumoxid vorliegen.

4. Zusammengesetzter Zuschlag zur Verwendung bei der Herstellung von rotem Y₂O₃:Eu-Leuchtstoff, dadurch gekennzeichnet, daß er 2 bis 6 Gewichtsteile Na₂CO₃, 2 bis 6 Gewichtsteile NaF und 0,5 bis 1,0 Gewichtsteile B₂O₃ pro 100 Gewichtsteile Yttriumoxid enthält.

## Revendications

1. Procédé de fabrication d'une matière luminescente rouge à partir d'oxyde d'yttrium (Y₂o₃) et d'oxyde d'europium (Eu₂o₃) caractérisé en ce qu'un flux composite composé d'un mélange de Na₂Co₃, NaF et B₂o₃ est utilisé, les proportions d'addition des composés ci-dessus pour 100 parties en poids d'oxyde d'yttrium étant :
Na₂Co₃ : 2 à 6 parties en poids
NaF : 2 à 6 parties en poids
B₂o₃ : 0,5 à 1 partie en poids

2. Procédé selon la revendication 1 caractérisé en ce que l'oxyde d'yttrium et l'oxyde d'europium sont mélangés ensemble avec 2 à 6 parties en poids de Na₂Co₃, 2 à 6 parties en poids de NaF et 0,5 à 1 partie en poids de B₂o₃, le mélange chauffé à une température de 1300-1400°C, lavé et séché.

3. Procédé selon la revendication 1 ou la revendication 2 caractérisé en ce que 5 à 10 grammes d'oxyde d'europium sont présents pour 100 grammes d'oxyde d'yttrium.

4. Flux composite pour servir à la fabrication d'une matière luminescente rouge Y₂o₃ : Eu caractérisé en ce que ce flux comprend 2 à 6 parties en poids de Na₂Co₃, 2 à 6 parties en poids de NaF et 0,5 à 1 partie en poids de B₂o₃ pour 100 parties en poids d'oxyde d'yttrium.
